# FASCICULE DE BREVET EUROPEEN

(11) **EP 3 532 832 B1**
(45) Date de publication et mention de la délivrance du brevet: **14.12.2022**
(21) Numéro de dépôt: 17797405.2
(22) Date de dépôt: 24.10.2017
(51) Int. Cl.: G01N 29/04, G01N 29/26, G01N 29/30, G01N 29/44, G01N 29/46, G01N 29/52

(54) **PROCÉDÉ DE CONTRÔLE NON DESTRUCTIF PAR ULTRASONS D'UN ASSEMBLAGE COLLÉ**
VERFAHREN ZUR ZERSTÖRUNGSFREIEN PRÜFUNG EINER VERKLEBTEN ANORDNUNG MITTELS ULTRASCHALL
METHOD FOR NONDESTRUCTIVE INSPECTION BY ULTRASOUND OF A BONDED ASSEMBLY

(30) Priorité: 25.10.2016 FR 1660355
(43) Date de publication de la demande: 04.09.2019
(73) Titulaire: Safran, 75015 Paris (FR)
(72) Inventeur: DUCOUSSO, Mathieu, Loïc, 77550 Moissy-Cramayel (FR); CUVILLIER, Nicolas, 77550 Moissy-Cramayel (FR)
(74) Mandataire: Gevers & Orès
(86) Numéro de dépôt international: PCT/FR2017/052926
(87) Numéro de publication internationale: WO 2018/078272

(56) Documents cités:
- CHO H ET AL: "Evaluation of the Thickness and Bond Quality of Three-Layered Media using Zero-Group-Velocity Lamb Waves", JOURNAL OF PHYSICS: CONFERENCE SERIES, INSTITUTE OF PHYSICS PUBLISHING, BRISTOL, GB, vol. 520, no. 1, 3 juin 2014 (2014-06-03), page 12023, XP020265499, ISSN: 1742-6596, DOI: 10.1088/1742-6596/520/1/012023 [extrait le 2014-06-03]
- GESLAIN A ET AL: "Spatial Laplace transform for complex wavenumber recovery and its application to the analysis of attenuation in acoustic systems", JOURNAL OF APPLIED PHYSICS, AMERICAN INSTITUTE OF PHYSICS, US, vol. 120, no. 13, 7 octobre 2016 (2016-10-07), XP012212491, ISSN: 0021-8979, DOI: 10.1063/1.4963827 [extrait le 2016-10-07]
- Claire Prada ET AL: "Remarkable properties of Lamb modes in plates Women in Applied Mathematics", , 2 mai 2011 (2011-05-02), XP055386231, Extrait de l'Internet: URL:http://acmac.uoc.gr/WAM2011/talks/Prad a.pdf [extrait le 2017-06-28]
- Dominique Clorennec ET AL: "Laser Generation and Detection of Zero-group Velocity Lamb Modes for Plate and Adhesive Disbond Characterization", 1st International Symposium on Laser Ultrasonics: Science, Technology and Applications, 16 juillet 2008 (2008-07-16), XP055386082, Extrait de l'Internet: URL:http://www.ndt.net/article/laser-ut200 8/papers/Clorennec LU2008.pdf [extrait le 2017-06-28]
- WU T-T ET AL: "Inverse determinations of thickness and elastic properties of a bonding layer using laser-generated surface waves", ULTRASONICS, IPC SCIENCE AND TECHNOLOGY PRESS LTD. GUILDFORD, GB, vol. 37, no. 1, 1 janvier 1999 (1999-01-01), pages 23-30, XP004154489, ISSN: 0041-624X, DOI: 10.1016/S0041-624X(98)00030-4

## Description

### DOMAINE TECHNIQUE

La présente invention concerne un procédé de contrôle non destructif (CND) d'un milieu multicouches anisotrope, type composite, et en particulier un procédé de contrôle quantitatif du niveau d'adhésion d'un joint de colle d'un assemblage collé destiné à supporter un effort mécanique.

### ETAT DE L'ART

Les matériaux composites offrent de nombreux avantages par rapport aux matériaux métalliques utilisés de manière conventionnelle dans le domaine de l'aéronautique. Parmi les avantages de ces matériaux composites, on peut citer leur grand rapport raideur/masse, leur bonne résistance à la fatigue et à la corrosion, et la bonne adaptabilité de leurs propriétés mécaniques aux sollicitations spécifiques qu'ils rencontrent au cours de leur utilisation.

L'utilisation de matériaux composites permet donc un allégement conséquent des structures. A titre d'exemple, dans l'aviation civile, l'usage des matériaux composites permet une réduction de la masse des pièces de 20% pour une raideur structurale égale voire même supérieure. Cela induit une économie estimée à 6% sur la masse totale de l'avion, équivalant à de fortes économies de carburant.

Cependant, les matériaux composites, par leurs caractéristiques intrinsèques, supportent difficilement le boulonnage ou le rivetage et ne peuvent pas être soudés. Ils nécessitent donc d'être collés pour être assemblés. Pour répondre aux normes de sécurité, il faut que ces structures assemblées puissent être inspectées régulièrement et de manière fiable, avec un diagnostic permettant de quantifier la tenue mécanique de l'assemblage collé. Dans ce contexte, l'aptitude à évaluer rapidement l'état d'une structure assemblée par collage présente des difficultés : il faut démonter partiellement certains organes pour permettre l'accès aux structures internes, obligeant ainsi un aéronef inspecté à être immobilisé en atelier. Bien qu'il existe de nombreuses méthodes d'évaluation non-destructives, la plus simple étant sans doute l'inspection visuelle, les méthodes classiques actuelles ne permettent pas une réelle quantification de la tenue mécanique d'un assemblage collé.

Faute de méthode appropriée pour contrôler quantitativement la qualité des collages, il est difficile (voire impossible) de mesurer le niveau d'adhésion de ces structures assemblées, et ainsi de tester, prouver et garantir leur qualité et leur fiabilité. Ceci empêche une généralisation des techniques de collage comme moyen d'assemblage et donc une généralisation de l'utilisation de pièces structurelles en matériaux composite dans l'industrie aéronautique.

Afin de pallier ce manque, des techniques CND réalisées à l'aide d'ondes ultrasonores sont étudiées depuis quelques années, comme par exemple dans les documents Cho H. et al. : « Evaluation of the Thickness and Bond Quality of Three-Layered Media using Zero-Group-Velocity Lamb Waves » ou Geslain A. et al. « Spatial Laplace transform for complex wavenumber recovery and its application to the analysis of atténuation in acoustic systems ». S'agissant d'ondes mécaniques, ces ondes seraient les plus à même de sonder une tenue mécanique (ou niveau d'adhésion). Ces dernières années, les études se sont en particulier portées sur une catégorie d'ondes ultrasonores, les ondes de Lamb à vitesse de groupe nulle (Ondes de Lamb à ZGV).

Dans un milieu d'épaisseur finie (cas d'une plaque dans le vide, par exemple) deux ondes de surface peuvent se propager sans interagir sur chacune des interfaces libres tant que l'épaisseur de la plaque est grande devant la longueur d'onde λ de l'onde de surface. Lorsque l'épaisseur de la plaque est du même ordre de grandeur que λ, il apparaît d'autres ondes qui résultent du couplage des différentes ondes partielles aux interfaces solide/vide de la plaque. Ces ondes de plaque, les ondes de Lamb, sont dispersives et ont la particularité de créer un champ de déplacement dans la totalité de l'épaisseur de la structure.

On appelle ondes de Lamb fuyantes un cas particulier d'ondes de Lamb se propageant dans la structure à partir du lieu de leur génération ; par opposition aux ondes de Lamb à vitesse de groupe nulle (Ondes de Lamb à ZGV) dont l'énergie acoustique reste confinée sous le lieu de la génération acoustique.

De manière classique et connue en soi, l'étude de la propagation des ondes de Lamb requiert le calcul des courbes de dispersion, qui peut être représenté par les profils de vitesse de phase en fonction d'un produit fréquence-épaisseur.

Le contrôle non destructif de plaques et de tubes d'assemblages collés peut ainsi être assuré par des ondes de Lamb fuyantes se propageant dans le milieu étudié. De manière connue en soi, pour un matériau donné, il existe un ensemble de résonances d'ondes de Lamb à ZGV et leur détection fournit une mesure absolue et locale du coefficient de Poisson. Ces modes non propagatifs peuvent ainsi être exploités pour caractériser des structures multicouches.

### EXPOSÉ DE L'INVENTION

Cette demande d'invention propose une nouvelle méthode pour réaliser une évaluation non destructive et quantitative des collages à l'aide, notamment, d'ondes de Lamb fuyantes ou d'ondes de Lamb à ZGV.

Ainsi, la présente invention a pour objet un procédé de contrôle non destructif par ultrasons d'un assemblage collé, selon la revendication 1.

Ce procédé permet ainsi avec un unique transducteur de mesurer l'épaisseur du joint de colle dans l'assemblage collé et de quantifier sa tenue mécanique (niveau d'adhésion). Ces deux paramètres sont primordiaux pour garantir la bonne conception d'un assemblage collé. Pour ce faire, le procédé propose une utilisation innovante du transducteur : la caractérisation de tenue mécanique (niveau d'adhésion) de l'assemblage collé par ondes de Lamb à ZGV est possible moyennant la connaissance des épaisseurs considérées dans l'assemblage collé, en particulier celle du joint de colle. Or, la première étape du procédé consiste précisément à mesurer cette épaisseur. Cette nouvelle utilisation du transducteur permet donc de réaliser les deux mesures successivement sans toucher au dispositif expérimental. Le contrôle est alors très simple et rapide à réaliser en environnement industriel.

Le procédé selon l'invention peut comprendre une ou plusieurs des caractéristiques suivantes, prises isolément les unes des autres ou en combinaison les unes avec les autres :
- le procéder peut mesurer les épaisseurs de différentes couches de la structure collée au moyen d'un transducteur ultrasonore disposé sur l'ensemble collé dans une position déterminée,
- la mesure d'épaisseur du joint est réalisée au moyen d'une méthode de mesure de temps de vol acoustique en réflexion,
- l'acquisition est faite dans le domaine temporel et spatial de manière à obtenir des courbes de dispersion destinées à être comparées avec un modèle de simulation permettant la modélisation de paramètres du niveau d'adhésion ou avec un abaque de courbes de dispersions prenant en compte les épaisseurs de l'assemblage et la quantification de la tenue mécanique du collage, cette comparaison permettant de quantifier la tenue mécanique de l'assemblage collé,
- les courbes de dispersions sont obtenues par inversion des ondes détectées selon une approche Bi-FFT ou une méthode de décomposition en valeurs singulières (SVD),
- l'acquisition des ondes de Lamb à ZGV est faite, en particulier, dans le domaine temporel de manière à obtenir une image de type B-scan du signal ultrasonore des ondes de Lamb à ZGV.
- les courbes de dispersion des ondes de Lamb à ZGV associées aux B-Scan enregistrés sont obtenues soit par simple Bi-FFF du B-scan soit par une approche dite de décomposition en valeur singulière (SVD).
- les courbes de dispersions ainsi obtenues sont destinées à être comparées avec un modèle de simulation permettant la modélisation de paramètres du niveau d'adhésion, et
- plusieurs peignes glissants sont successivement créés pour générer successivement différents modes ZGV, les paramètres de chaque niveau d'adhésion ainsi mesurés étant utilisés pour superposer les simulations aux expérimentations et ainsi mesurer le niveau d'adhésion du joint de colle.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est un schéma illustrant le déroulement de la première étape d'un procédé selon l'invention réalisée au moyen d'une méthode de mesure de temps de vol acoustique en réflexion,
- la figure 2 est un schéma illustrant le déroulement de la deuxième étape d'un procédé selon l'invention,
- la figure 3 est un schéma d'acquisition avec un peigne glissant nécessaire à l'obtention des courbes de dispersion pour observer les modes à ZGV des ondes de Lamb considérées.

### DESCRIPTION DETAILLEE

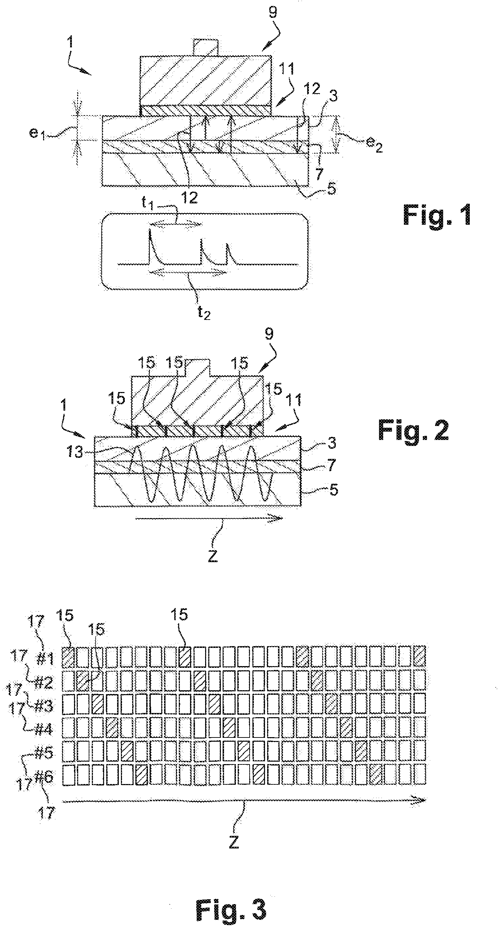

On se réfère à présent à la figures 1. Elle montre un échantillon d'un assemblage collé 1 soumis à la première étape du procédé décrit. L'assemblage collé 1 est un assemblage composé d'une première couche 3 constituée d'un premier matériau composite et d'une deuxième couche 5 constituée du même ou d'un deuxième matériau composite ou non, assemblées entre elles par un joint de colle 7.

Un dispositif ultrasonore 9 est posé au contact de l'échantillon d'assemblage collé 1. En effet, Le dispositif ultrasonore 9 de l'exemple illustré est un transducteur 9 ultrasonore multiéléments 11 fonctionnant au contact. Les caractéristiques intrinsèques du transducteur 9 (plan ou souple, nombre d'éléments 11, dimensions, fréquence centrale, etc.) peuvent différer selon l'assemblage collé 1 considéré pour optimiser la génération/détection des phénomènes physiques mis en jeu, notamment l'émission et l'acquisition d'un signal ultrasonore 12 émis. L'ensemble du procédé est réalisé en mettant un unique transducteur 9 multiéléments 11 au contact de l'assemblage collé 1. Ce transducteur 9 est utilisé pour l'ensemble du procédé (les deux étapes) et n'est pas déplacé avant la fin du procédé.

La première étape du procédé est destinée à mesurer l'épaisseur du joint de colle 7 de l'assemblage collé 1 à l'aide de l'émission et de l'acquisition d'un signal ultrasonore 12. Cette première étape est réalisée selon une méthode classique impulsion/écho et mesure de temps de vol.

La figure 1 montre cette étape. Elle consiste à réaliser une mesure de temps de vol acoustique en réflexion, t1, t2. Cette approche est bien décrite dans les procédures UT COSAC. Il s'agit de mesurer le temps t1, t2 nécessaire à un parcours acoustique aller/retour et, connaissant la vitesse acoustique dans les matériaux 3, 5, 7 parcourus, il est aisé de quantifier les épaisseurs e1, e2 des matériaux 3, 5, 7 sous le transducteur 9. Cette méthode est applicable à un transducteur 9 multiéléments 11.

Les figures 2 et 3 illustrent le fonctionnement de la deuxième étape du procédé. Cette deuxième étape est une mesure d'adhésion par ondes de Lamb à ZGV 13. Les ondes de Lamb à ZGV 13 sont des résonances ultrasonores de structures restant confinées sous la source d'excitation. L'énergie de ces ondes 13 est donc très peu dissipée spatialement et ces ondes 13 ont une longue durée de vie et une forte interaction avec la matière. Comme mentionné ci-dessus, il a été démontré que ces ondes 13 peuvent permettre de sonder la qualité d'un assemblage collé 1 moyennant que l'on connaisse les épaisseurs caractéristiques des différentes couches de l'assemblage collé 1. Il faut donc connaître l'épaisseur du joint de colle 7. Cette épaisseur est connue grâce à la première étape du procédé.

Ces ondes 13 sont difficiles à émettre/détecter et à ce jour, seuls les ultrasons-laser ont permis de les émettre/détecter. Ainsi, pour générer les modes de Lamb à ZGV 13 dans l'assemblage collé 1, le procédé utilise le même transducteur 9 multiéléments 11 que celui utilisé pour réaliser la première étape du procédé. La deuxième étape du procédé est réalisée juste après la mesure d'épaisseur du joint de colle 7 et le transducteur 9 n'a été ni touché ni déplacé entre les deux étapes du procédé.

Une partie des éléments 11 du transducteur 9 est utilisée en tant qu'éléments émetteurs 15 et l'autre partie des éléments 11 est utilisée en mode réception.

Pour optimiser la génération des modes de Lamb à ZGV 13, les éléments 15 du transducteur 9 travaillant en mode émission sont spatialement positionnés de telle sorte qu'ils créent une excitation spatialement périodique (selon l'axe Z parallèle aux différentes couches de matériaux 3, 5, 7 de l'assemblage collé 1), comme illustré sur les figures 2 et 3. On appelle cette excitation spatialement périodique selon Z « un peigne spatial de génération ».

La période de peigne est choisie pour correspondre à la longueur d'onde du mode ZGV des ondes de Lamb à ZGV 13 désiré. Les éléments émetteurs 15 du transducteur 9 ont donc une distribution spatiale en forme de peigne, répartie sur toute la surface du transducteur 9. Les autres éléments 11 du transducteur 9 multiéléments 11 fonctionnent en mode réception et enregistrent un signal résolu en temps.

L'acquisition 17 est faite dans le domaine temporel pour chaque élément 11 et permet d'obtenir une image en mode B-Scan de la propagation du signal ultrasonore 19. Une transformation mathématique dans l'espace réciproque (longueur d'ondes et fréquences ultrasonores) est ensuite réalisée pour obtenir des courbes de dispersion des ondes de Lamb à ZGV 13 émises par l'élément émetteur 15. La transformation est préférentiellement faite en utilisant une approche mathématique SVD (Singular Value Décomposition) mais peut aussi être réalisée en utilisant une simple approche mathématique dite bi-FFT. Pour être inversée en utilisant une approche SVD, le peigne doit être glissant, comme illustré sur la figure 3.

C'est-à-dire que lors de chaque acquisition 17, les éléments émetteurs 15 changent de position. En hachuré, on a représenté, pour chaque émission/acquisition 17, l'élément émetteur 15 alors que les éléments récepteurs 11 sont présentés en blanc.

Les courbes de dispersions sont obtenues de la même manière que lors de la première étape en réalisant une transformation inverse du signal 13, selon une approche mathématique qui peut être Bi-FFT ou SVD. Pour être inversée en utilisant une approche SVD, le peigne doit être glissant, comme illustré sur la figure 3.. C'est-à-dire que lors de chaque acquisition 17, les éléments émetteurs 15 changent de position.

Les courbes de dispersions des modes de Lamb à ZGV 13 sont ensuite exploitées par comparaison avec un modèle de simulation où une raideur d'interface (niveau d'adhésion) est modélisée. Plusieurs peignes différents peuvent être successivement créés pour générer successivement différents modes ZGV.

Les paramètres de la raideur d'interface sont utilisés pour superposer les simulations aux expérimentations et ainsi mesurer ces niveaux d'adhésion qui comportent une signature de la qualité du collage réalisé et donc de la fiabilité du joint de colle 7 et donc de l'assemblage collé 1.

## Revendications

1. Procédé de contrôle non destructif par ultrasons d'un assemblage collé (1), **caractérisé en ce qu'**il comprend les étapes consistants à :
- mesurer une épaisseur d'un joint de colle (7) de l'assemblage collé (1) au moyen d'un transducteur ultrasonore (9) disposé sur l'ensemble collé (1) dans une position déterminée,
- mesurer le niveau d'adhésion de pièces de l'assemblage collé (1) au moyen du même transducteur ultrasonore (9) maintenu dans ladite position déterminée, le niveau d'adhésion étant mesuré au moyen d'ondes de Lamb à ZGV (13),
et **en ce que** :
- le transducteur ultrasonore (9) est multiéléments (11) et comprend :
- des éléments (15) travaillant en mode émission pour émettre des ondes de Lamb à ZGV (13) dans le joint de colle (7), et présentant une distribution spatiale en forme de peigne répartie sur toute la surface du transducteur (9) de manière à créer un peigne spatial périodique, la période du peigne étant choisie pour correspondre à la longueur d'onde du mode ZGV des ondes de Lamb à ZGV, les éléments émetteurs (15) changeant de position lors de chaque acquisition (17), et
- d' autres éléments (11) utilisés pour acquérir (17) les ondes de Lamb à ZGV (13) émises.

2. Procédé selon la revendication précédente, dans lequel, la mesure d'épaisseur du joint de colle (7) est réalisée au moyen d'une méthode de mesure de temps de vol acoustique en réflexion.

3. Procédé selon l'une des revendications précédentes, dans lequel l'acquisition (17) est faite dans le domaine temporel et spatial de manière à obtenir des courbes de dispersion destinées à être comparées avec un modèle de simulation permettant la modélisation de paramètres du niveau d'adhésion ou avec un abaque de courbes de dispersion.

4. Procédé selon la revendication précédente où les courbes de dispersions sont obtenues par inversion des ondes (19, 13) détectées selon une approche Bi-FFT ou une méthode de décomposition en valeurs singulières (SVD).

5. Procédé selon la revendication précédente, dans lequel plusieurs peignes glissants sont successivement créés pour générer successivement différents modes ZGV, les paramètres de chaque niveau d'adhésion ainsi mesurés étant utilisés pour superposer les simulations aux expérimentations et ainsi mesurer le niveau d'adhésion du joint de colle (7).

## Patentansprüche

1. Zerstörungsfreies Prüfverfahren einer verklebten Baugruppe (1) durch Ultraschall, **dadurch gekennzeichnet, dass** es die Schritte umfasst, bestehend aus:
- Messen einer Dicke einer Klebefuge (7) der verklebten Baugruppe (1) mittels eines auf der verklebten Montage (1) in einer bestimmten Position angeordneten Ultraschallwandlers (9),
- Messen des Klebkraftniveaus von Teilen der verklebten Baugruppe (1) mittels des gleichen Ultraschallwandlers (9), der in der bestimmten Position gehalten wird, wobei das Klebkraftniveau mittels ZGV-Lamb-Wellen (13) gemessen wird,
und dadurch, dass:
- der Ultraschallwandler (9) Mehrelemente (11) ist und umfasst:
- Elemente (15), die im Emissionsmodus zum Emittieren von ZGV-Lamb-Wellen (13) in die Klebefuge (7) arbeiten, und eine räumliche Verteilung in Kammform aufweisen, die auf der gesamten Oberfläche des Wandlers (9) derart verteilt sind, um einen räumlich periodischen Kamm zu erzeugen, wobei die Periode des Kamms gewählt ist, um der Wellenlänge des ZGV-Modus der ZGV-Lamb-Wellen zu entsprechen, wobei die Emitterelemente (15) bei jeder Erfassung (17) ihre Position verändern, und
- andere zum Erfassen (17) der emittierten ZGV-Lamb-Wellen (13) genutzte Elemente (11).

2. Verfahren nach dem vorstehenden Anspruch, wobei die Messung der Dicke der Klebefuge (7) mittels eines Messverfahrens der akustischen Flugzeit bei Reflexion durchgeführt wird.

3. Verfahren nach einem der vorstehenden Ansprüche, wobei die Erfassung (17) in der zeitlichen und räumlichen Domäne auf eine Weise erfolgt, um Dispersionskurven zu erhalten, die dazu bestimmt sind, mit einem Simulationsmodell, das die Modellierung von Parametern des Klebkraftniveaus gestattet, oder mit einem Dispersionskurvenabakus verglichen zu werden.

4. Verfahren nach dem vorstehenden Anspruch, wobei die Dispersionskurven durch Inversion von Wellen (19, 13) erhalten werden, die gemäß einem Bi-FFT-Ansatz oder einem Singulärwertzerlegungsverfahren (SVD) detektiert wurden.

5. Verfahren nach dem vorstehenden Anspruch, wobei mehrere gleitende Kämme nacheinander erzeugt werden, um nacheinander unterschiedliche ZGV-Modi zu generieren, wobei die Parameter jedes so gemessenen Klebkraftniveaus genutzt werden, um die Simulationen den Experimenten zu überlagern und so das Klebkraftniveau der Klebefuge (7) messen.

## Claims

1. A nondestructive method for inspection by ultrasound of an adhesively bonded assembly (1), **characterized in that** it comprises the steps consisting of:
- measuring a thickness of a bonded joint (7) of the adhesively bonded assembly (1) using an ultrasound transducer (9) placed in a determined position on the bonded assembly (1);
- measuring the degree of adhesion of parts of the bonded assembly (1) using the same ultrasound transducer (9) held in said determined position, the degree of adhesion being measured by ZGV Lamb waves (13),
and **in that**:
- the ultrasound transducer (9) is a multi-element transducer (11) and comprises:
- emitting elements (15) used to emit ZGV Lamb waves (13) in the adhesively bonded joint (7) and having a comb-shaped spatial distribution distributed over the entire surface of the transducer (9) to create a periodic spatial comb, the comb period being selected to correspond to the wavelength of the ZGV mode of the ZGV Lamb waves (13), the emitting elements (15) change position during each acquisition (17),
- other elements (11) used to acquire the emitted ZGV Lamb waves (13).

2. The method according to Claim 1, wherein the thickness of the adhesive joint (7) is measured by measuring the acoustic flight time in reflection.

3. The method according to any of the preceding claims, wherein the acquisition (17) is made in the temporal and spatial domain so as to obtain dispersion curves intended to be compared with a simulation model that models parameters of the degree of adhesion or with a monogram of dispersion curves.

4. The method according to the preceding claim, wherein the dispersion curves are obtained by inversion of detected waves (19, 13) according to a Bi-FFT approach or a singularvalue decomposition (SVD) method.

5. The method according to the preceding claim, wherein several sliding combs are created successively to generate different ZGV modes successively, the parameters of each degree of adhesion thus measured being used to superpose the simulations on experiments and thus measure the degree of adhesion of the adhesively bonded joint (7).
